(19) Europäisches Patentamt
European Patent Office
Office européen des brevets

(11) **EP 4 706 390 A2**

## (12) EUROPEAN PATENT APPLICATION

(43) Date of publication:
**11.03.2026 Bulletin 2026/11**

(21) Application number: **25211068.9**

(22) Date of filing: **28.06.2022**

(51) International Patent Classification (IPC):
***A01M 7/00*** *(2006.01)*

(52) Cooperative Patent Classification (CPC):
**A01M 7/0089; B05B 1/083; B05B 1/3053; B05B 12/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2021 US 202163215733 P**

(62) Document number(s) of the earlier application(s) in accordance with Art. 76 EPC:
**22750977.5 / 4 362 673**

(71) Applicant: **Raven Industries, Inc.**
**Sioux Falls, SD 57117-5107 (US)**

(72) Inventors:
• **PREHEIM, John D.**
**Beresford, South Dakota, 57004 (US)**

• **KOCER, Jared Ernest**
**Sioux Falls, South Dakota, 57110 (US)**

(74) Representative: **Pfenning, Meinig & Partner mbB**
**Patent- und Rechtsanwälte**
**Joachimsthaler Straße 10-12**
**10719 Berlin (DE)**

Remarks:
•This application was filed on 24.10.2025 as a divisional application to the application mentioned under INID code 62.
•Claims filed after the date of receipt of the divisional application (Rule 68(4) EPC).

## (54) VALVE CONTROL SYSTEMS AND METHODS

(57) Nozzle control systems and methods for applying an agricultural product using an agricultural vehicle and plurality of valves separated into subgroups are disclosed. An example method includes actuating the valves to dispense the agricultural product, wherein the actuating includes (a) actuating a first subgroup of valves and a second subgroup of valves in succession using a phase delay; and (b) actuating successive valves in the first subgroup and successive valves in the second subgroup using at least one subgroup time delay. The subgroup time delay can be determined based on one or more vehicle speed values and a total number of the plurality of valves.

FIG. 1

EP 4 706 390 A2

# EP 4 706 390 A2

**Description**

CROSS-REFERENCE TO RELATED PATENT DOCUMENTS

This patent application claims the benefit of priority under 35 U.S.C. § 119(e) to U.S. Provisional Patent Application Serial Number 63/215,733, titled "VALVE CONTROL SYSTEMS AND METHODS," filed on June 28, 2021, which is incorporated herein by reference in its entirety.

**Technical Field**

This document pertains generally, but not by way of limitation, to agricultural equipment.

**BACKGROUND**

An agricultural product (e.g., a liquid fertilizer, carrier fluid, granular product, herbicides, or the like) are typically applied to crops and weeds located in a farm field. In some examples, the agricultural product is applied with a sprayer system, for instance a sprayer mounted on a prime mover (e.g., a tractor, truck, all-terrain-vehicle, or the like). The sprayer system includes one or more valves which facilitate application of agricultural product to the field (e.g., by spraying the agricultural product from a nozzle). In some examples, a valve is operated by a controller, for instance to translate the valve between an open position and a closed position. In the open position, the valve permits flow of the agricultural product through the valve. In the closed position, the valve does not permit flow of the agricultural product through the valve (e.g., between a valve inlet and a valve outlet).

**OVERVIEW**

The present inventors have recognized, among other things, that a problem to be solved can include accurately applying an agricultural product to a field and avoiding problematic pressure drops and electrical demand surges while applying the product. For example, in agricultural spraying application involving the use of multiple valves (and associated nozzles) on a boom, the valves can be actuated in groups with the valves within each group actuated at a time slightly delayed from an immediately preceding valve actuation. The time delay can help minimize boom pressure changes and electrical demand; however, the inventors have recognized that care must be taken in order to avoid gaps in spray coverage. In particular, techniques that provide time delays based on cycle times and the number of valves can result in undesirable gaps in coverage. Accordingly, in some approaches the agricultural fluid is misapplied to the field and the misapplication affects one or more characteristics of the crop (e.g., growth, development, yield or the like).

The present subject matter can help provide a solution to this problem, such as by providing systems and methods for applying agricultural product with a vehicle (e.g., towing vehicle, implement, sprayer, etc.) where a time delay between valves of a subgroup is a function of one or more vehicle speed values. For example, a system and method of applying an agricultural product using an agricultural vehicle and plurality of valves separated into subgroups can include supplying the agricultural product to the plurality of valves, determining a phase delay between actuation of a first subgroup of the plurality of valves and a second subgroup of the plurality of valves, and determining one or more subgroup time delays for separating actuation of valves within the first subgroup and the second subgroup. The one or more subgroup time delays can be determined based on one or more vehicle speed values and a total number of the plurality of valves. The valves can be actuated to dispense the agricultural product by actuating the first subgroup of valves and the second subgroup of valves in succession using the phase delay, and actuating successive valves in the first subgroup and successive valves in the second subgroup using the one or more subgroup time delays.

In an example, one or more subgroup time delays for valves in a subgroup can be based on one or more vehicle speed values, a total number of valves, and a set distance. The one or more speed values can include a set maximum speed and/or a current vehicle speed value (e.g., a current speed of the towing vehicle or a speed of an individual nozzle). In one technique, the one or more subgroup time delays can be determined by dividing the set distance by the product of the set maximum speed and the total number of the plurality of nozzles. In another technique, the one or more subgroup time delays includes can be determined by dividing the set distance by the product of the current speed of the vehicle and the total number of the plurality of nozzles. In yet another technique, the one or more subgroup time delays can be determined by determining a current delay time by dividing the set distance by the product of the current speed of the vehicle and the total number of the plurality of nozzles, determining a maximum delay time by dividing the set distance by the product of the minimum speed value and the total number of the plurality of nozzles, using the maximum delay time for the one or more subgroup time delays when current delay time is greater than the maximum delay time, and using the current delay time for the one or more subgroup time delays when the current delay time is not greater than the maximum delay time.

Using a vehicle speed input such as one or more of a maximum speed value, a minimum speed value, and a current speed value of a vehicle can enable more accurate application of agricultural product to a field and can help reduce or avoid problematic changes in boom pressure and electrical demand. For example, using a time delay, between actuation of successive valves in a valve subgroup, that is based upon a vehicle speed value and a set distance assures that all valves actuate as a function of the set distance when the vehicle moves at the speed value. When a current speed of the vehicle (e.g., a speed or velocity determined using GPS and/or yaw sensors) is used as a vehicle speed input, the time delay between successive valve actuations can vary with speed and thus be dynamic. This can further avoid gaps in coverage that can result when successive valve actuations are so far apart that gaps in product coverage occur and product is not sprayed on crops and/or weeds. Accordingly, using a speed based time delay between valve actuations in a subgroup allow for agricultural product to be more accurately and precisely applied to the field, for example to improve one or more crop characteristics (e.g., growth, development, yield or the like).

This overview is intended to provide an overview of subject matter of the present patent application. It is not intended to provide an exclusive or exhaustive explanation of the invention. The detailed description is included to provide further information about the present patent application.

## BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

Figure 1 illustrates a perspective view of an example of an agricultural sprayer.
Figure 2 illustrates a schematic of an exemplary nozzle control system.
Figure 3 illustrates a detailed schematic view of an exemplary nozzle control system.
Figure 4 illustrates an example of a valve, according to an embodiment of the present subject matter.
Figure 5 illustrates an example of a valve, according to an embodiment of the present subject matter.
Figure 6A illustrates an example control system, according to an embodiment of the present subject matter.
Figure 6B illustrates an example control system, according to an embodiment of the present subject matter.
Figure 7 illustrates an example method, according to an embodiment of the present subject matter.
Figures 8 - 11 illustrate example timing diagrams, according to an embodiment of the present subject matter.
Figure 12 illustrates a block diagram of an example machine upon which any one or more of the techniques discussed herein may perform, according to an embodiment of the present subject matter.

## DETAILED DESCRIPTION

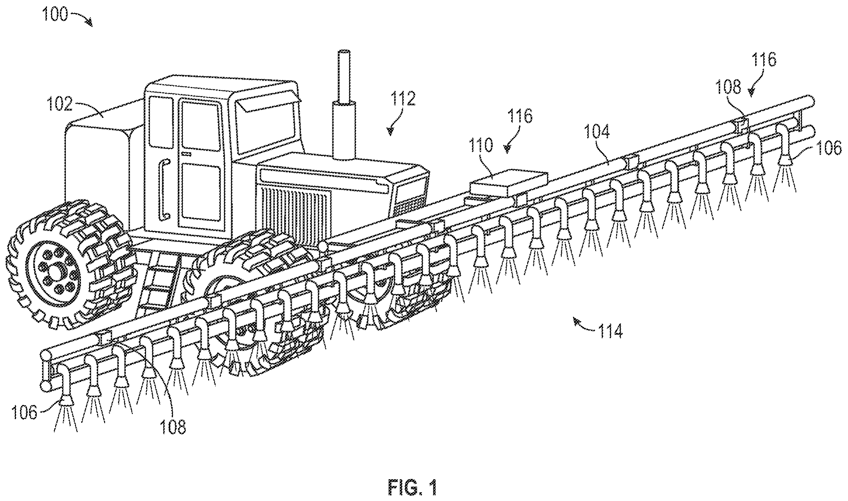

Figure 1 illustrates a perspective view of an example of an agricultural sprayer 100. In an example, the agricultural sprayer 100 includes a reservoir tank 102, one or more sprayer booms 104, and a plurality of nozzles 106. The example agricultural sprayer 100 also includes one or more electronic control units (ECUs) 108 (e.g., a microprocessor based system) and a master node 110. (e.g., a microprocessor based system). While not shown in Figure 1, the sprayer also includes a plurality of valves, with each valve being associated with one or more nozzles. As will be discussed further below, the valves can be divided into two or more subgroups and withing each subgroup successive valves can be actuated with a time delay based on a vehicle speed input.

In an example, the reservoir tank 102 is integral with a prime mover 112 (e.g., a tractor, truck, combine, vehicle, or the like). In some examples, the reservoir tank 102 is a towed behind the prime mover 112 (e.g., the reservoir tank 102 is included with a trailer, or the like). The reservoir tank 102, in an example, includes an agricultural product mixed with a carrier fluid, such as water. In some examples, the carrier fluid and the agricultural product are mixed in-line prior to or at the sprayer boom 104. The nozzles 106 are positioned along the sprayer boom 104 to deliver the agricultural product (and the carrier fluid) to a field , for instance a crop or weed located in an agricultural field 114. Crops include, but are not limited to, any product grown in an agricultural field, such as row and non-row based crops. Agricultural products include, but are not limited to, fertilizers, water, pesticides, fungicides, herbicides, or the like.

The agricultural sprayer 100 includes one or more controllers 116, for example the ECUs 108 and the master node 110. In an example, the master node 110 operates in conjunction with the one or more ECUs 108 to control delivery of the agricultural product from the reservoir tank 102, to the sprayer boom 104 and the associated nozzles 106 for delivery to the agricultural field or crop.

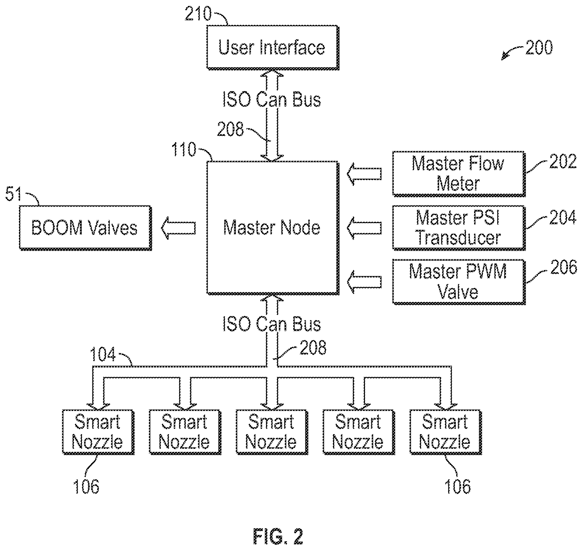

Figure 2 illustrates a schematic of an exemplary nozzle control system 200, wherein the one or more nozzles 106 located on the boom 104 control a respective nozzle flow rate of an agricultural product dispensed from the nozzle 106. As shown in Figure 2, the master node 110 is communicatively coupled to one or more valves (e.g., the PWM valve 206) of the boom 104, such that system pressure within the boom 104 can be controlled by the master node 110. In some examples, the master node 110 of the current system is not configured to control the flow rate within the system 200, boom 104, or at the smart nozzles 106. Instead, the master node 110 controls the pressure within the system 200, boom 104, or at the smart nozzles 106, and the pressure control provides control of the flow rate (e.g., control to a lower pressure decreases flow while control to a higher pressure increases flow). The master node 110 is in communication with a master flowmeter 202, a master pressure transducer 204, and a master pulse width modulation (PWM) valve 206. The master node 110 controls the master PWM valve 206 to provide a targeted system pressure (through modulated operation of a system pump associated with the master PWM valve 206), such that a desired droplet size of the agricultural product is generated at the nozzles 106. For example, environmental conditions, such as wind, humidity, rain, temperature, field characteristics, or user preference determine whether a smaller or larger droplet size of the agricultural product is preferred. By controlling a targeted system pressure (e.g., maintaining, changing with variations in flow rate or the like), the preferred droplet size is maintained with the system 200.

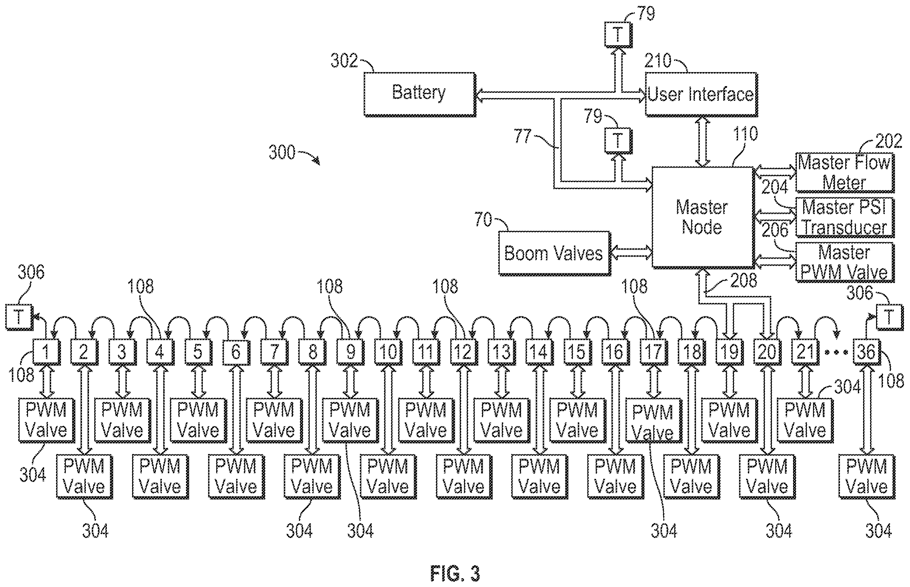

In the exemplary embodiment, each of the nozzles 106 is a smart nozzle that includes an electronic control unit (ECU) (e.g., ECU 108, shown in Figure 1 or the like) that regulates, determines, and/or controls the nozzle flow rate of the agricultural product dispensed from the nozzle 106, as discussed in reference to Figure 3. In other embodiments, a group of the nozzles 106 are associated with a common ECU and is collectively considered a single smart nozzle. The smart nozzles 106 are connected to, for example, the boom 104 and communicatively coupled to a controller area network (e.g., nozzle CAN bus 208, wireless network or the like) of the overall control system 200. As discussed herein, the CAN bus 208 is configured to distribute overall system information from the master node 110 (e.g., master node). The ECU at each smart nozzle 106 uses data from the overall system information to regulate, determine, and/or control the nozzle flow rate of each corresponding smart nozzle 106. The ECU at each smart nozzle 106 can, for example, actuate the valve associated with the nozzle to dispense agricultural product.

The master node 110 controls one or more of a system pressure or system flow rate using, for example, the master pressure transducer 204 (or in other examples the flow meter, flow meter and pressure transducer together or the like) and the master pulse width modulation (PWM) valve 206. Although Figure 2 illustrates a PWM valve as a master valve 206, embodiments are not so limited. For example, the master valve 206 includes any valve capable of controlling pressure or flow rate of a system, such as a ball valve, PWM valve, butterfly valve or the like. For instance, the master node 110 maintains the system pressure or flow rate at a target system value (e.g., a target system pressure or target system flow rate). In another example, each smart nozzle 106 controls the component flow rate to the constituent nozzles associated with each smart nozzle. In another example, the master node controls the system pressure or system flow rate to one or more target values and the smart nozzles 106 control the flow rate for each of the constituent nozzles (e.g., one or more) associated with each smart nozzle. Collectively, the smart nozzles 106 may control the overall agricultural product flow rate of the system.

In an example, the target system pressure is provided by a user, such as at the user interface 210 connected to the master node 110 by the nozzle CAN bus 208. In an additional example, the user also provides a target system flow rate (e.g., volume/area) at the user interface 210. In an example, the master node 110 provides one or more of the target system flow rate or the target system pressure to each of the one or more smart nozzles 106, such that each smart nozzle 106 (or each ECU, as discussed herein) determines an individual agricultural product flow rate (or pressure) for the smart nozzle 106. For example, the system target flow rate is divided by the number of nozzles 106 to provide a target agricultural product flow rate for each of the one or more nozzles 106. In an example, the master node 110 measures the flow rate (e.g., volume per time) with a master flow meter 202 and compares it with the overall target flow rate (e.g., designated by one or more of the user, crop type, soil characteristic, agricultural product type, historical data, or the like). The master node 110 is configured to determine a difference or error, if present, between the measured system flow rate and the target system flow rate. In such an example, the master node 110 provides the determined difference, by the nozzle CAN bus 208, to the individual nozzles 106 (or ECUs, as discussed herein). The one or more nozzles 106 receive the difference on the CAN bus 208 and adjust their pressure/flow/duty cycle curve using the difference (e.g., compensating for errors in the system) to reduce the error between the measured and target system flow rates (or reduce the error between the measured and target system pressures).

Additionally, in at least some examples, the master node 110 reports the actual pressure, measured by the master pressure transducer 204, as well as boom 104 information, including, but not limited to, one or more of yaw rate, speed, number of smart nozzles of the boom, distance between smart nozzles on the boom, to the smart nozzles 106 (or ECUs, as described herein) for individual flow rate control (or pressure control) of each of the smart nozzles 106. For example, the information provided from the master node 110 is used in addition to nozzle characteristics to control the individual flow rate control of each smart nozzle 106. Nozzle characteristics include, but are not limited to, one or more of nozzle position on a boom, length of the boom, nozzle spacing, target flow rate for the system (e.g., one or more of carrier fluid, injection product, agricultural product of the mixed carrier fluid and injection product, or the like), target pressure for the system (e.g., one or more of carrier fluid, injection product, agricultural product of the mixed carrier fluid and injection product, or the like), yaw rate of the boom, yaw rate of the agricultural sprayer, speed of the agricultural sprayer, one or more of the overall system pressure or flow rate (e.g., actual pressures or flow rates of the carrier fluid, injection product, mixed agricultural product or the like), agricultural product characteristics, valve performance such as a moveable valve operator transition time (including differences between specified and actual duty cycles), or the like.

The system 200 is configured for installation on an agricultural sprayer (e.g., the agricultural sprayer 100, shown in Figure 1). In an example, the sprayer moves during operation (e.g., translates, rotates, accelerates or the like). The system optionally adjusts flow rates at one or more of the smart nozzles, concentrations of injection products delivered by the smart nozzles, or the like. Accordingly, the system provides a consistent application pattern of agricultural product to the crop. In another example, the one or more nozzle characteristics are dynamic and, and in some examples, the delivery of agricultural product by the nozzles is dynamic in correspondence with the nozzle characteristics. For instance, one or more of flow rates, pressures or the like through nozzles associated with a smart nozzle 106 dynamically change relative to other smart nozzles 106 of the system.

Figure 3 illustrates a detailed schematic view of an exemplary nozzle control system 300. The control system 300 includes the master node 110 communicatively coupled to one or more valves of the boom 104, such that system pressure within the boom 104 can be controlled by the master node 110. Further, the master node 110 includes inputs from one or more of the master flowmeter 202, the master pressure transducer 204, and the master pulse width modulation (PWM) valve 206. Further, as described herein, the master node 110 is coupled to the user interface 210 and, in an example, a battery 302, so as to provide power to one or more of the master node 110 and user interface 210.

As shown in the embodiment of Figure 3, a smart nozzle 106 optionally includes an ECU 108 coupled to a valve 304 (e.g., a PWM valve, ball valve, butterfly valve, or the like). That is, Figure 3 illustrates 36 ECUs relating directly to 36 nozzles of the nozzle control system 300, but embodiments are not so limited. The master node 110 is communicatively coupled, by nozzle CAN bus 208 to ECU-18 and ECU-19, wherein ECU-18 108 and ECU- 19 108 define a center region of the boom. From the center region of the boom, the ECUs 108 are communicatively coupled to another ECU 108 in the direction toward each terminal end 306 of the boom. As discussed further below, the ECUs 108 (and associated valves) can be divided into two or more subgroups. For example, the ECUs can be divided into two or more subgroups. For example, in an even subgroup, ECU-18 is communicatively couple to ECU-16, which is communicatively coupled to ECU-14, and so forth until the optional terminator after ECU-2 is reached and the same pattern holds for the other half of the boom. In the odd subgroup, ECU-17 is communicatively couple to ECU-15, which is communicatively coupled to ECU-13, and so forth until the optional terminator after ECU-1 is reached and the same pattern holds for the other half of the boom. Although 36 ECUs 108 are illustrated, embodiments are not so limited. Although two subgroups are described, the ECUs/valves can be divided into more than two subgroups. The ECUs 108 in each subgroup can communicate in a daisy chain fashion using a CAN bus, a wireless network, and/or a wired network, for example.

Further, as shown in Figure 3, each ECU 108 is coupled to one PWM valve 304, however, embodiments are not so limited. In another example, a single ECU 108 is communicatively coupled to more than one PWM valve 304. For instance, a single ECU 108 is communicatively coupled to more than one valve, such as every other valve, arrays of valves along portions of booms or the like. In an example, 12 ECUs split control of the 36 nozzles of the boom. In an example, a plurality of nozzles are partitioned into nozzle groups, such that each nozzle group includes an ECU 108 configured to control a nozzle group flow rate (or nozzle pressure that in turn controls flow) of the agricultural product dispensed from each nozzle of the nozzle group (by way of associated control valves) based on the nozzle characteristics, as described herein, of the respective nozzles. Thus, a smart nozzle includes, but is not limited to, a single nozzle, an associated valve and an associated ECU. In another example, a smart nozzle includes a group of nozzles (having associated valves) that are associated with a common ECU.

In still another example, the system 300 includes one or more location fiducials associated with the system 300, the one or more location fiducials are configured to mark the location of one or more nozzles (or ECUs) of the plurality of nozzles on a field map (e.g., indexed with product flow rates, moisture content, crop type, agricultural product type, or the like). Optionally, each of the nozzles, nozzle groups, or ECUs 108 of the system is configured to control the agricultural product at individual rates according to the location of the one or more nozzles (or ECUs 108), the movement of the one or more nozzles relative to the field, another frame of reference or the like (and optionally in addition to the nozzle characteristics described herein). Further, each of the plurality of nozzles (or ECUs 108) is optionally cycled, such as on/off, according to the location of the nozzle (or location of a nozzle group or ECU 108) relative to a frame of reference, such as a field.

In an example, each nozzle ECU 108 is programmable to receive, track, or modify designated nozzle control factors (e.g., flow rate, the related specified duty cycle, the actual duty cycle, or the like). For example, each ECU 108 monitors one or more of nozzle spacing, target flow rate for the system or for the nozzle(s) controlled by the ECU, target pressure for the system, speed of the agricultural sprayer, yaw rate, nozzle location on the field, or the like. Such examples provide the benefit of comporting the system to user specifications, provide greater programmability of the system, and providing cost effective nozzle specific flow rate and pressure solutions (e.g., through modification of valve duty cycles). In yet another example, the ECUs 108 associated with each nozzle are instead consolidated into one or more centralized nodes that determine (e.g., monitor or calculate) one or more of actual flow rate, actual pressure or the like of each of the respective nozzles in a similar manner to the previously described ECUs 108 associated with each of the nozzles.

The controllers 116 (e.g., the ECUs 108, the master node 110, or the like) control the nozzle flow rate (or the timing of flow through the nozzle) based on a number of parameters, including, but not limited to: speed of the sprayer or boom, yaw rate, target system flow rate (e.g. volume/area), target system pressure, and on/off command at runtime. Such parameters permit the controllers 116 to calibrate the duty cycle curve (e.g., by adjusting the actual duty cycle of a valve) of each smart nozzle needed to achieve one or more of the target nozzle flow rate, system target flow rate, system pressure, nozzle pressure, target nozzle timing of each of the smart nozzles. For instance, calibrating the duty cycle curve includes guiding an actual duty cycle of the nozzles (and their associated valves) to a specified duty cycle of the nozzles. The specified duty cycle corresponds to one or more of a target flow rate, target pressure (combination of both) or the like. Each smart nozzle is further configured according to nozzle spacing on the boom, location on the boom, and nozzle type. Further, in some examples, each smart nozzle regulates or controls the nozzle flow rate (or pressure) based on the location of the nozzle in the field (as described above). The controllers 116 can further control the timing (e.g., phase delay and time delays) for valve actuation as discussed herein.

As described herein, the agricultural sprayer 100 (shown in Figure 1) includes a nozzle control system including a plurality of nozzles 106 having one or more associated valves 304 (e.g., such as a PWM solenoid valve as shown in Figure 3, or the like) that regulate flow in order to provide a specified target application of an agricultural product from the nozzles 106. As a plurality of nozzles 106 are used across the boom 104 (shown in Figure 1), achieving specified flow performance for each of the nozzles 106 enhances application precision and accuracy while minimizing application errors (e.g., misapplication, underapplication, overapplication, or the like). In some examples, one or more factors cause inconsistency in nozzle flow and droplet size (e.g., the size of droplets of agricultural product dispensed by the nozzle 106) of the sprayed agricultural product. Examples of these factors include, but are not limited to voltage drop of a solenoid drive voltage due to chassis wiring resistance, manufacturing tolerances of the mechanical elements in a valve itself (e.g., the valve 304, shown in Figure 3), valve wear, valve contamination from the agricultural product, pressure variations across the boom or boom sections, variation due to an installed tip on the outlet of the nozzle, or open-stroke and close-stroke transition times for a moveable valve operator within the valve 304 controlling flow to the nozzle 106.

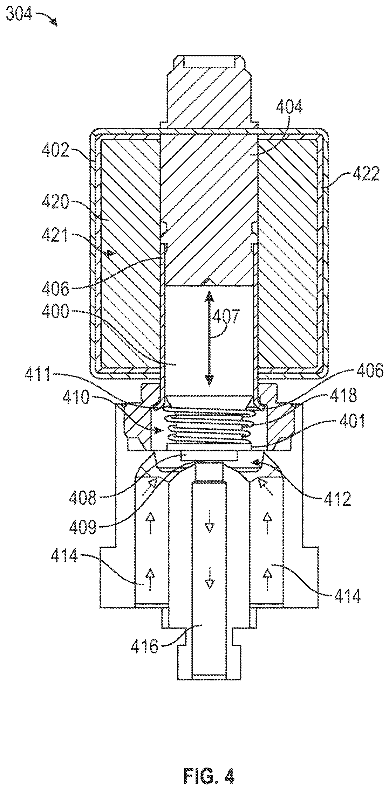

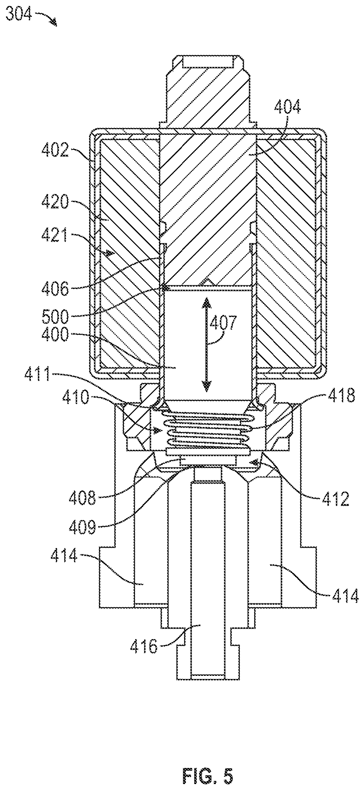

Figure 4 and Figure 5 illustrate sectional views of an example of the valve 304 in an open position and a closed position, respectively. The valve 304 is optionally a solenoid valve, for instance an electro-mechanical device that opens and closes an orifice by moving a moveable valve operator 400 (e.g., a poppet, gate, or the like) in a valve body 402 (e.g., a pressure vessel, frame, or the like). In an example, the valve body 402 of the valve 304 contains a lug 404 (e.g., a ferromagnetic material) and a housing 406 (e.g., a non-ferromagnetic material) that is connected to the lug 404. The valve operator 400 is movable in the housing 406, for instance with a range of motion 407 to open and close the valve. The valve operator 400 includes a seal 408 (e.g., a gasket, membrane or the like) coupled with a first end 410 of the valve operator 400. In an example, movement of the valve operator 400 within the housing 406 selectively opens and closes a channel 412 between a valve inlet 414 and a valve outlet 416. For example, the seal 408 engages with a valve seat 409 (shown in the closed configuration in Figure 5) thereby inhibiting flow through the channel 412. In the open position, the seal 408 is disengaged from the seat 409 (as shown in Figure 4) thereby allowing flow through the channel 412 (e.g., because the valve operator 400 is moved away from the seat 409). Figure 4 includes arrows indicating flow within the valve inlet 414 and the valve outlet 416.

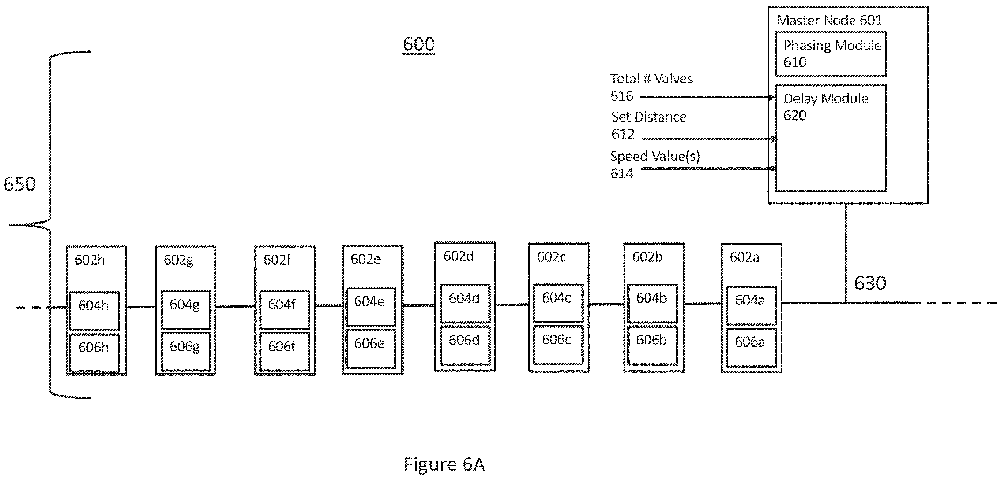

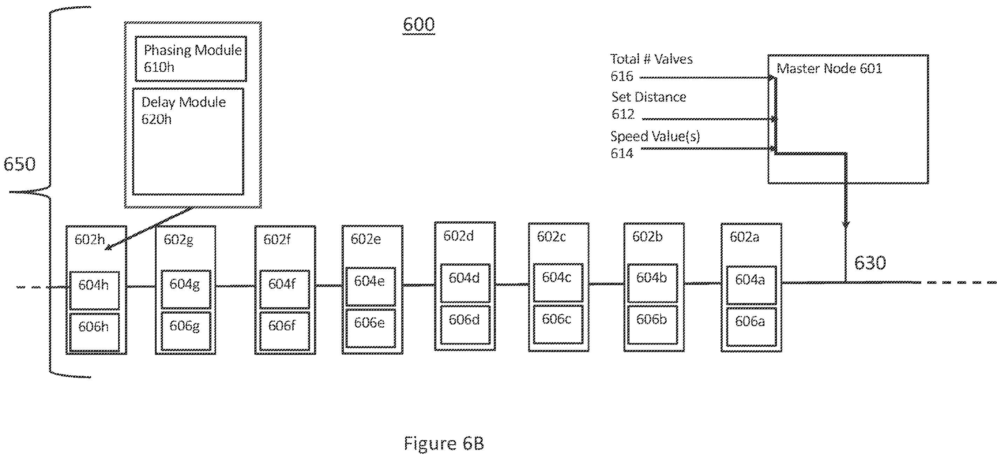

Figure 6A and 6B illustrate schematic diagrams of example nozzle control systems 600 which can operate, for example, on an agricultural vehicle such as sprayer 100 (shown in Figure 1). The nozzle control system 600 can, for example, be used in combination with one or more components (or functions) of the nozzle control system 200 (shown in Figure 2) or the nozzle control system 300 (shown in Figure 3). The nozzle control system 600 includes a master node 601 and a plurality of smart nozzles 602a-h with each smart nozzle 602a-h having an associated ECU 604a-h and valve 606a-h (e.g., a PWM solenoid valve, or the like). For purposes of illustration only one side of the boom and a small number of associated smart nozzles is shown. The valves 606a-h regulate flow to provide a specified target application rate of an agricultural product from the agricultural sprayer. The master node 601 and ECUs form a processing system 650 that can control the dispensing of fluid from the nozzles 602a-h and valves 606a-h. The smart nozzles 602a-h (and associated valves and ECUs) are separated into two subgroups - odd (602a, 602c, 602e and 602g) and even (602b, 602d, 602g and 602h). The valves in each subgroup can be coupled together using a CAN bus 630 for example.

With regard to Figure 6A, the example control system 600 further includes a phasing module 610 configured to determine a phasing delay between actuation of a first subgroup (e.g., odd) of the plurality of valves 606a-h and a second subgroup (e.g., even) of the plurality of valves 606a-h. The phasing module 610 can be implemented by the master node 601, for example. The phasing delay can, for example, be determined by using a set phase delay received by the user, using a factory set phase delay, or using a dynamically determined phase delay based on vehicle and/or boom operating conditions. With two subgroups of valves (e.g., odd and even), the phasing delay can be at or about 180 degrees. On the other side of the boom (not shown), the valves can also be separated into odd and even groups also separated by a phase delay of 180 degrees. In this example, the four groups (odd and even on each side of the boom) can be actuated with a phase delay between groups of about 90 degrees, resulting in odd and even subgroups on each side of the boom being 180 degrees out of phase.

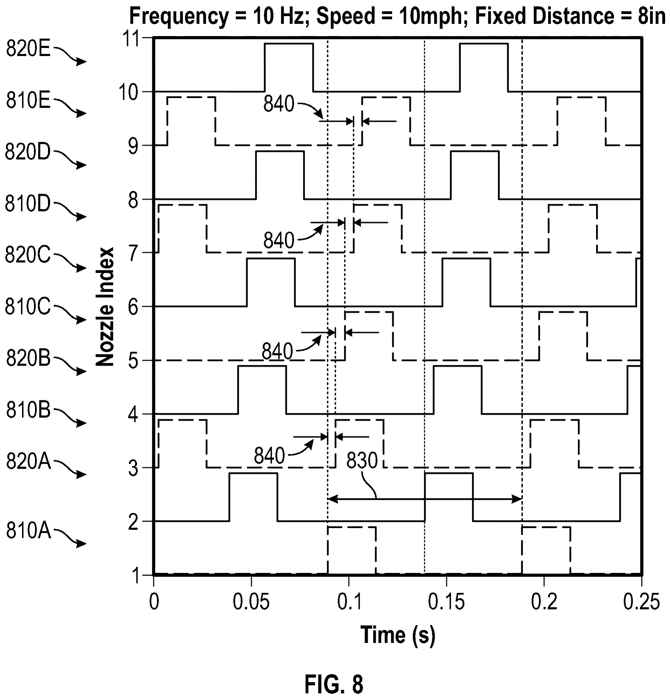

The cycle time (e.g., the time between successive actuations of a subgroup of the valves) for the valves 606a-h can vary depending on the application. For example, the cycle time can be 10 to 40Hz. The cycle time can be determined by the processing system 650 by obtaining a time entered by a user, obtaining a factory set value or can be determined dynamically based on operating conditions of the boom, nozzles and/or vehicle or to obtain desired spray objectives. Figures 8-11 illustrate example timing diagrams of two subgroups of valves.

The processing system 650 also includes a delay module 620 configured to determine at least one subgroup time delay for separating actuation of valves within the first subgroup (e.g., odd) and the second subgroup (e.g., even). For ease of discussion, the delay module 620 will be described with reference to a single, common delay time being used to actuate valves 606 in each subgroup, odd (602a, 602c, 602e and 602g) and even (602b, 602d, 602g and 602h). The disclosure is however not so limited. The delay module 620 can, for example, determine more than one subgroup time delay. For example, a different subgroup time delay can be determined for one or more or all valves 606a-h. This can be advantageous where the system 600 employs different types of valves or the valves travel at different speeds. As will be discussed further below, the delay module 620 can determine a subgroup time delay based on one or more vehicle speed values 614, a set distance 612 and a total number of the valves 616 (e.g., eight shown although more valves would typically be on the boom). The delay module 620 can also be implemented by the master node 601, for example. In other embodiments, a phasing module 610 and delay module 620 can be implemented each of the ECUs 604a-h, implemented on a processor separate from the master node 601 and ECUs 604a-h, or can be distributed in operation, e.g., across one or more of the ECUs 604a-h and the master node 601, etc. Figure 6B discussed below illustrates an example control system having a phasing module and a delay module operating on each ECU.

Still referring to Figure 6A, the processing system 650 is configured to actuate the valves 606a-h to dispense the agricultural product using a phasing delay between subgroups (e.g., odd and even) and a subgroup time delay (or more than one time delay) between valves 606a-h within each subgroup (e.g., odd and even). For example, the processing system 650 actuates the first subgroup of valves (e.g., odd) and the second subgroup of valves (e.g., even) in succession using the phase delay and actuates successive valves in the first subgroup and successive valves in the second subgroup using a subgroup time delay.

Actuation signals for each valve can be provided in a variety of manners. For example, the master node 601 and ECUs 602a-602h can be configured so that each ECU is set with its position along the boom. The master node 601 can issue a command over bus 630 or a timing signal that causes the first valve 602a to actuate and then that valve 602a can send an actuation command signal over bus 630 to the next, adjacent valve 602b to actuate, which in turn sends an actuation command signal 642 to the next valve 602c and so forth until the terminal end of the valves is reached. Each actuation command signal can include a phasing delay and a subgroup time delay so that the odd valves are actuated with the phasing delay relative to the even valves and so that each valve with a subgroup (e.g., odd or even) actuate relative to a preceding valve in its subgroup offset by the subgroup time delay. Sending commands to and from a valve can include sending a command to and from an ECU associated with the valve. The ECUs can activate a solenoid coil of the valve as discussed above. Upon receipt of an actuation command signal, an ECU can delay for a subgroup delay time (relative to a preceding valve in its subgroup) before actuating its respective valve. The subgroup delay time for a valve can be included in the actuation command signal or can be provided by the master node over the bus 630. In another example, the master node 601 can send out an actuation time for each valve 602a-h (e.g., phase delay plus subgroup delay time relative to time zero) to each ECU 602a-h in the initial configuration of each nozzle 602a-h.

The delay module 620 can determine the subgroup time delay(s) based one or more vehicle speed values 614, a set distance 612 and the total number of valves 616 on the boom. The vehicle speed inputs can, for example, include one or more of a current speed value for the vehicle (e.g., a speed for a vehicle, an individual nozzle or an average speed of nozzles on the side of the boom using, e.g., a GPS sensor and a yaw sensor), a minimum speed value for the vehicle, and/or a maximum speed value for the vehicle. The minimum and maximum speed values can be set by the user or factory set. The minimum speed value can, for example, be based on desired tip volume flow rate and tip pressure. The set distance can be a user or factory setting and corresponds the distance over which all of the valves actuate for a given vehicle speed value. The set distance can, for example, range from 4 to 12 inches and in the timing diagrams discussed below is 8 inches. With an 8 inch set distance and four subgroups of valves (odd and even and each side of the boom), each of the valves in a given subgroup will acuate over a 2 inch distance.

In one example, the delay module 620 determines the one or more subgroup time delays by dividing a set distance by the product of a set maximum speed ($V_{max}$), and the total number of the plurality of nozzles using the following formula [1], for example:

$$\text{subgroup time delay} = \text{set distance}/(V_{max} * \text{number of nozzles})$$

In this example, the subgroup time delay is fixed so that when the vehicle travels at a lower speed, the distance over which the valves all actuate will be shorter than the set distance.

In another example, delay module 620 can determine the subgroup time delay(s) dynamically using a current speed of the vehicle (e.g., towing vehicle speed or a nozzle speed). For example, the delay module 620 can determine the one or more subgroup time delays by dividing a set distance by the product of the current speed of the vehicle ($V_{current}$) and the total number of the plurality of nozzles using the following formula [2], for example:

$$\text{subgroup time delay} = \text{set distance}/(V_{current} * \text{number of nozzles})$$

Dynamically adjusting the subgroup time delays can provide better coverage by minimizing gaps in application of the spray.

In another example, the delay module 620 can determine the subgroup time delay using a current speed value of the vehicle ($V_{current}$) and a minimum speed value ($V_{min}$). For example, the delay module can determine the subgroup time delays by determining a current (e.g., dynamic) delay time ($T_{current}$) by dividing the set distance by the product of the current speed of the vehicle and the total number of the plurality of nozzles and determining a maximum (e.g., fixed) delay time ($T_{max}$) by dividing the set distance by the product of the minimum speed value and the total number of the plurality of nozzles. The delay module 620 can then, for example, use the maximum delay time for the one or more subgroup time delays when current delay time is greater than the maximum delay time and use the current delay time for the one or more subgroup time delays when the current delay time is not greater than the maximum delay time. This can be done using the following formula [3], for example:

$$T_{current} = \text{set distance}/(V_{current} * \text{number of nozzles})$$

$$T_{max} = \text{set distance}/(V_{min} * \text{number of nozzles})$$

$$\text{If } T_{current} > T_{max} \text{ then the subgroup phase delay} = T_{max}$$

Else the subgroup phase delay = $T_{distance}$

As noted above, the delay module 620 can determine multiple subgroup time delays or can determine a single, common delay time used to actuate all of the valves in each subgroup over a period of time (e.g., over one or more cycles). For example, the delay module 620 can calculate subgroup time delay(s) with each new cycle or after a given number of cycles. The subgroup delay time can, for example, be dynamically determined for each valve based on the current speed of the valve.

The delay module 620 can also account for processing delays in the processing system (e.g., communication delays in sending commands from the master node to an ECU or between ECUs, processor delays in processing commands by the ECU or master node). In one example, the delay module 620 can determine a subgroup time delay (e.g., multiple or a common time delay) by determining an initial subgroup time delay (e.g., using one of formulas [1] - [3] discussed above) and can determine the subgroup time delay (e.g., the common delay time) by subtracting a processing delay from the initial subgroup time delay. The processing delay can be determined testing the system 600 and measuring the processing delay either at the factory or dynamically during operation.

Figure 6B illustrates an example control system 600 according to an embodiment of the present disclosure. In this example, the control system 600 includes ECUs 602a-h that each include a phasing module and delay module (a phasing module 610h and delay module 620h is only illustrated for ECU 602h). The master node 601 receives the total number of valves 616, the set distance 612 and one or more speed values 614 and passes this information to the ECUs over bus 630. Each of the ECUs 602a-h uses its respective phasing module and delay module to calculate its own phase delay and subgroup time delay using the total number of valves 616, the set distance 612 and one or more speed values 614. Each ECU can calculate its phase delay and subgroup time delay using any of the techniques discussed herein.

In one example, using a common subgroup time delay ($t_D$), the ECUs of the nozzles 602a-h can determine their actuation times based on their location on the boom in their subgroup, as follows:

| Nozzle | Location on Boom | Location in Subgroup | Actuation Time ($t_A$) |
|---|---|---|---|
| 602a | 0 | 0 (even) | $t_A = 0$ |
| 602b | 1 | 0 (odd) | $t_A = 0 + \text{phase delay}$ |
| 602c | 2 | 1 (even) | $t_A = 1 \times t_D$ |
| 602d | 3 | 1 (odd) | $t_A = 1 \times t_D + \text{phase delay}$ |

(continued)

| Nozzle | Location on Boom | Location in Subgroup | Actuation Time ($t_A$) |
|--------|------------------|----------------------|------------------------|
| 602e | 4 | 2 (even) | $t_A = 2 \times t_D$ |
| 602f | 5 | 2 (odd) | $t_A = 2 \times t_D$ + phase delay |
| 602g | 6 | 3 (even) | $t_A = 3 \times t_D$ |
| 602h | 7 | 3 (odd) | $t_A = 3 \times t_D$ + phase delay |

In another example, where the system uses different subgroup time delays for each valve ($t_{Da-h}$), the ECUs of the nozzles 602a-h can determine their actuation times based on their location on the boom in their subgroup, as follows:

| Nozzle | Location on Boom | Location in Subgroup | Actuation Time ($t_A$) |
|--------|------------------|----------------------|------------------------|
| 602a | 0 | 0 (even) | $t_A = 0$ |
| 602b | 1 | 0 (odd) | $t_A = 0$ + phase delay |
| 602c | 2 | 1 (even) | $t_A = t_{Dc}$ |
| 602d | 3 | 1 (odd) | $t_A = t_{Dd}$ + phase delay |
| 602e | 4 | 2 (even) | $t_A = (L_{Dc} + t_{De})$ |
| 602f | 5 | 2 (odd) | $t_A = (t_{Dd} + t_{Df})$ + phase delay |
| 602g | 6 | 3 (even) | $t_A = (t_{Dc} + t_{De} + t_{Dg})$ |
| 602h | 7 | 3 (odd) | $t_A = (t_{Dd} + t_{Df} + t_{Dh})$ + phase delay |

Here, each nozzle 602a-h determines its actuation time based on the prior subgroup delay times of nozzles in its group and its own subgroup delay time.

The above configurations of subgroups are provided by way of example and not limitation. The nozzles/valves can be grouped in numerous ways. For example, on a 96-nozzle boom, one subgroup of nozzles can be nozzles 1-48 on one side of the boom and another subgroup of nozzles can be nozzles 49-96 on the other side. Here, the nozzles on one side of the boom are offset by a phase delay from the nozzles on the other side of the boom, and nozzles within each subgroup are further separated by a subgroup time delay. If desired, these two 48-nozzle subgroups can further be configured into lower-level subgroups (e.g., odd and even on each side). In another example, the 96 nozzles can be configured into an odd and even subgroup across the whole boom. For example, with nozzle 1 on terminal end of one side of the boom and nozzle 96 on the terminal end of the other side of the boom, nozzles 1, 3, 5...95 can be in an odd subgroup and nozzles 2, 4, 6...96 in an even subgroup.

In some examples, one or more nozzles can be paired together and actuate at the same time (e.g., with the same phase delay and subgroup time delay). For example, in a 96-nozzle system, nozzles can be paired as follows: 1 and 96 (the end nozzles), 2 and 95, 3 and 94, 4 and 93, and so forth. One subgroup of nozzles can be 1/96, 3/ 94, etc. and a second subgroup can be 2/95, 4/93 and so forth. Many other pairing arrangements can be used. For example, starting from the center (rather than the ends), nozzles can be paired as follows: 48 and 49, 47 and 50, and so forth, with one subgroup being 48/49, 46/51... and another subgroup being 47/50, 45/52 and so forth. Pairing nozzles/valves can be particularly beneficial in systems with a large number of nozzles. In another example, with an odd number of nozzles, a center nozzle (e.g., 49 in a 97-nozzle boom) can be actuated first with the two nozzles to either side (e.g., 48 and 50 in a 97-nozzle boom) actuated with a phase delay (e.g., 180 degrees relative to the center nozzle) and the same subgroup time delay so that the two nozzles (e.g., 48 and 50) actuate at the same time. An adjacent set of nozzles (e.g., 47 and 51) can be configured to acuate in phase with the center nozzle (e.g., 49) and with a same subgroup time delay, and so forth. In another example, with an even number of nozzles, the two middle nozzles (e.g., 46 and 47 in a 96-nozzle boom) are typically actuated with a phase delay (e.g., 180 degrees) relative to one another.

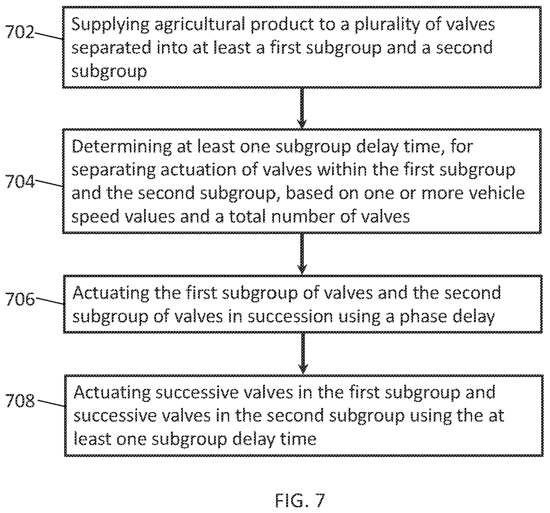

Figure 7 illustrates a method of applying an agricultural product using an agricultural vehicle and plurality of valves separated into subgroups at least a first subgroup of the plurality of valves and a second subgroup of the plurality of valves. At block 702, agricultural product is supplied to the plurality of valves. This can for example include controlling a boom, boom valves, and nozzle valves (e.g., smart nozzles) as discussed above. At block 704, at least one subgroup time delay is determined. The subgroup time delay is used to separate actuation of valves within the first subgroup and the second subgroup. The at least one subgroup time delay is determined based on one or more vehicle speed values and a total number of the plurality of valves. For example, as discussed above, a delay module (e.g., on an ECU or a master node) can determine a subgroup time delay based on a set distance, the total number of valves, and one or more vehicle speed inputs (e.g., a current speed value, a minimum speed value and/or a maximum speed value). To actuate the valves and dispense the agricultural product, the method includes actuating the first subgroup of valves and the second subgroup of valves in succession using a phase delay (block 706) and actuating successive valves in the first subgroup and successive valves in the second subgroup using the at least one subgroup time delay (block 708).

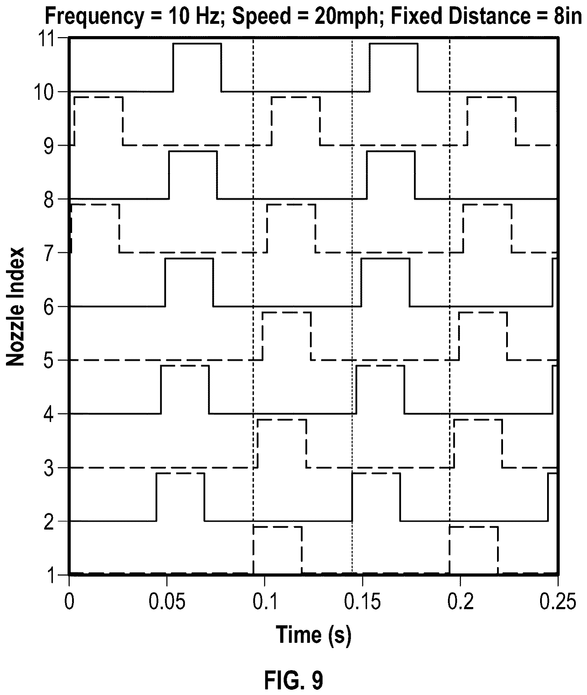

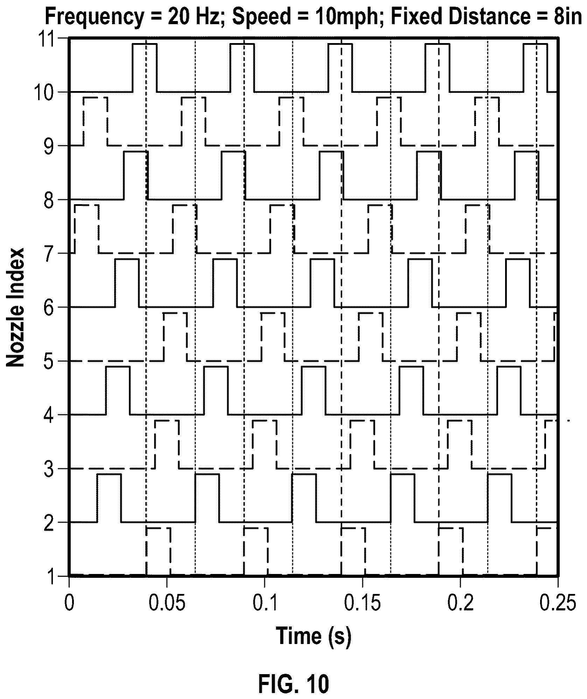

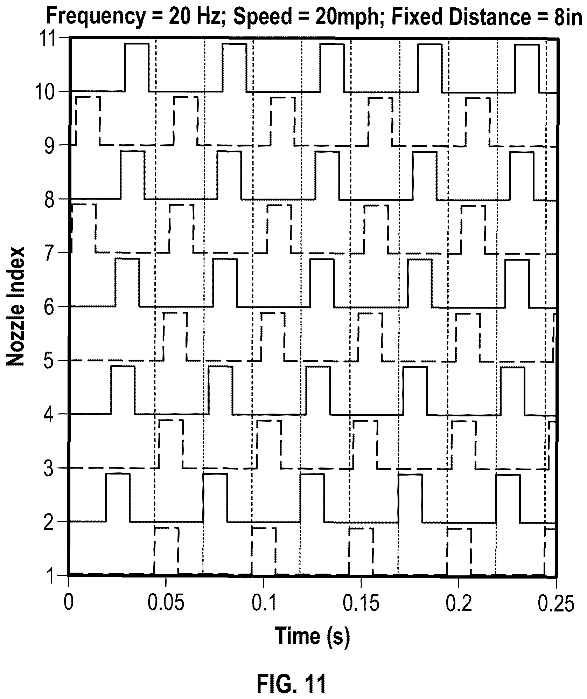

Figures 8-11 illustrate example timing diagrams for a sprayer system's valve actuation. The diagrams illustrate ten valves separated into two groups though, as mentioned earlier, the present disclosure is not so limited. Figure 8 illustrates operation of the system where a current vehicle speed is 10 mph, a set distance is 8 inches, a first group of valves (810A-E) and a second groups of valves (820A-E) are actuated at a cycle time of 10 Hz, and the two subgroups 810A-E, 820A-E are separated by a phase delay 830 of about 180 degrees. In this example, using a dynamic subgroup time delay technique (e.g., formula [2] or [3] above, the valves A-E within each subgroup 810, 820 are separated by a time delay 840 of 4.5 ms. The delay time 840 is only shown with regard to vales 810A-E though is the same for valves 820A-E. Figure 9 illustrates a system operation similar to Figure 8 with the exception of a current vehicle speed of 20 mph. In this example, the subgroup time delay decreases to 2.2 ms as a result of the faster vehicle speed. Figure 10 illustrates a similar system operation as in Figure 8 with the exception of a faster cycle time of 20 Hz. Vehicle speed remains at 10 mph, and notably the subgroup time delay remains the same as in Figure 8 at 4.5 ms despite the faster cycle time. Finally, Figure 11 illustrates a system operation similar to Figure 8 with the exception of a current vehicle speed of 20 mph and a cycle time of 20Hz. A summary of the of the resulting time delays is set forth in the table below.

|         | Speed  | Set Distance | Cycle Time | Time Delay |
|---------|--------|--------------|------------|------------|
| Fig. 8  | 10 mph | 8 inches     | 10 Hz      | 4.5 ms     |
| Fig. 9  | 20 mph | 8 inches     | 10 Hz      | 2.2 ms     |
| Fig. 10 | 10 mph | 8 inches     | 20 Hz      | 4.5 ms     |
| Fig. 11 | 20 mph | 8 inches     | 20 Hz      | 2.2 ms     |

As discussed earlier by varying the subgroup time delay with vehicle speed, spray coverage can be better controlled. This can provide advantages over fixed delay systems using cycle time for example which can provide gaps in spray coverage. Even using a fixed delay based on a maximum vehicle velocity can provide better spray coverage since the valves are successively actuated over a much smaller time thus minimizing or avoiding gaps as compared to systems spreading out valve actuation over an entire cycle time. Figures 8-11 also illustrate different duty cycles for the valves. A nozzle's duty cycle can vary with flow rate and speed. For example, a nozzle can increase its duty cycle as the flow rate or speed increases and decrease it as speed or flow rate decrease.

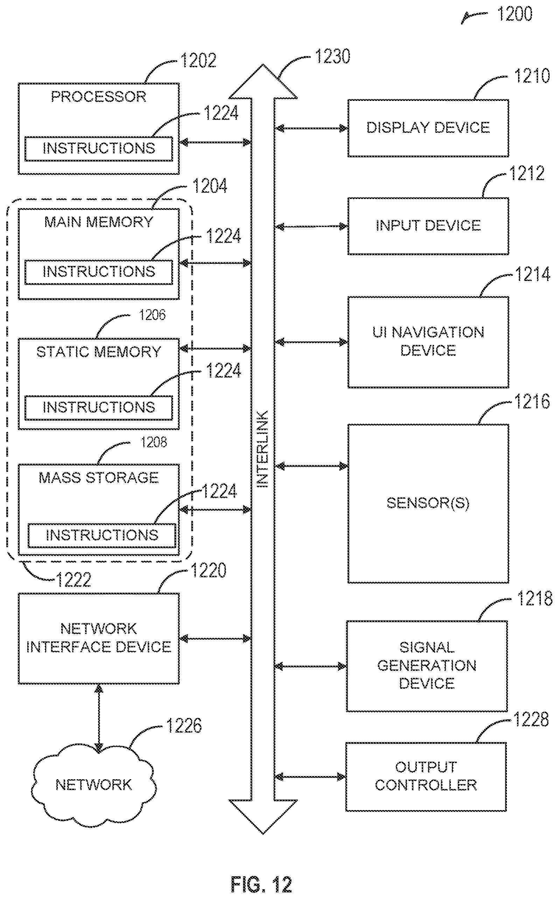

Figure 12 illustrates a block diagram of an example machine 1200 (e.g., the controller 606, or the like) upon which any one or more of the techniques (e.g., methodologies) discussed herein may perform, for example one or more of the algorithms 801, 900, 1000, or 1100. Examples, as described herein, may include, or may operate by, logic or a number of components, or mechanisms in the machine 1200. Circuitry (e.g., processing circuitry) is a collection of circuits implemented in tangible entities of the machine 1200 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 1200 follow.

In alternative embodiments, the machine 1200 may operate as a standalone device or may be connected (e.g., networked) to other machines. In a networked deployment, the machine 1200 may operate in the capacity of a server machine, a client machine, or both in server-client network environments. In an example, the machine 1200 may act as a peer machine in peer-to-peer (P2P) (or other distributed) network environment. The machine 1200 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 1200 may include a hardware processor 1202 (e.g., a central processing unit (CPU), a graphics processing unit (GPU), a hardware processor core, or any combination thereof), a main memory 1204, a static memory (e.g., memory or storage for firmware, microcode, a basic-input-output (BIOS), unified extensible firmware interface (UEFI), etc.) 1206, and mass storage 1208 (e.g., hard drive, tape drive, flash storage, or other block devices) some or all of which may communicate with each other via an interlink (e.g., bus) 1230. The machine 1200 may further include a display unit 1210, an alphanumeric input device 1212 (e.g., a keyboard), and a user interface (UI) navigation device 1214 (e.g., a mouse). In an example, the display unit 1210, input device 1212 and UI navigation device 1214 may be a touch screen display. The machine 1200 may additionally include a storage device (e.g., drive unit) 1208, a signal generation device 1218 (e.g., a speaker), a network interface device 1220, and one or more sensors 1216, such as a global positioning system (GPS) sensor, a yaw sensor, compass, accelerometer, or other sensor. The machine 1200 may include an output controller 1228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 1202, the main memory 1204, the static memory 1206, or the mass storage 1208 may be, or include, a machine readable medium 1222 on which is stored one or more sets of data structures or instructions 1224 (e.g., software) embodying or utilized by any one or more of the techniques or functions described herein. The instructions 1224 may also reside, completely or at least partially, within any of registers of the processor 1202, the main memory 1204, the static memory 1206, or the mass storage 1208 during execution thereof by the machine 1200. In an example, one or any combination of the hardware processor 1202, the main memory 1204, the static memory 1206, or the mass storage 1208 may constitute the machine readable media 1222. While the machine readable medium 1222 is illustrated as a single medium, the term "machine readable medium" may include a single medium or multiple media (e.g., a centralized or distributed database, and/or associated caches and servers) configured to store the one or more instructions 1224.

The term "machine readable medium" may include any medium that is capable of storing, encoding, or carrying instructions for execution by the machine 1200 and that cause the machine 1200 to perform any one or more of the techniques of the present disclosure, or that is capable of storing, encoding or carrying data structures used by or associated with such instructions. Nonlimiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magnetooptical disks; and CD-ROM and DVD-ROM disks.

The instructions 1224 may be further transmitted or received over a communications network 1226 using a transmission medium via the network interface device 1220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, peer-to-peer (P2P) networks, among others. In an example, the network interface device 1220 may include one or more physical jacks (e.g., Ethernet, coaxial, or phone jacks) or one or more antennas to connect to the communications network 1226. In an example, the network interface device 1220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1200, and includes digital or analog communications signals or other intangible medium to facilitate communication of such software. A transmission medium is a machine readable medium.

**Various Notes & Aspects**

Aspect 1 can include subject matter such as a method of applying an agricultural product using an agricultural vehicle and plurality of valves separated into subgroups. The method can include supplying the agricultural product to the plurality of valves separated into at least a first subgroup of the plurality of valves and a second subgroup of the plurality of valves. At least one subgroup time delay can be determined for separating actuation of valves within the first subgroup and the second subgroup. The at least one subgroup time delay can be determined based on one or more vehicle speed values and a total number of the plurality of valves. The method can further include actuating the valves to dispense the agricultural product. The actuating can include: actuating the first subgroup of valves and the second subgroup of valves in succession using a phase delay; and actuating successive valves in the first subgroup and successive valves in the second subgroup using the at least one subgroup time delay.

Aspect 2 can include, or can optionally be combined with the subject matter of Aspect 1 to include, determining the at least one subgroup time delay by, e.g., determining a delay time based on the one or more vehicle speed values, the total number of the plurality of valves, and a set distance.

Aspect 3 can include, or can optionally be combined with the subject matter of any of Aspects 1-2 to include, wherein the one or more vehicle speed values includes a set maximum speed value.

Aspect 4 can include, or can optionally be combined with the subject matter of any of Aspects 1-3 to include, wherein determining the delay time includes dividing the set distance by the product of the set maximum speed and the total number of the plurality of nozzles.

Aspect 5 can include, or can optionally be combined with the subject matter of any of Aspects 1-4 to include, wherein the one or more vehicle speed values includes a current speed value for the vehicle.

Aspect 6 can include, or can optionally be combined with the subject matter of any of Aspects 1-5 to include, wherein determining the delay time includes dividing the set distance by the product of the current speed value and the total number of the plurality of nozzles.

Aspect 7 can include, or can optionally be combined with the subject matter of any of Aspects 1-6 to include, wherein the one or more vehicle speed values includes a current speed value for the vehicle and a minimum speed value.

Aspect 8 can include, or can optionally be combined with the subject matter of any of Aspects 1-7 to include, wherein determining the delay time includes: determining a current delay time by dividing the set distance by the product of the current speed of the vehicle and the total number of the plurality of nozzles; determining a maximum delay time by dividing the set distance by the product of the minimum speed value and the total number of the plurality of nozzles; using the maximum delay time for the delay times when current delay time is greater than the maximum delay time; and using the current delay time for the delay time when the current delay time is not greater than the maximum delay time.

Aspect 9 can include, or can optionally be combined with the subject matter of any of Aspects 1-8 to include, determining the minimum speed value based on tip volume flow rate and tip pressure.

Aspect 10 can include, or can optionally be combined with the subject matter of any of Aspects 1-9 to include, wherein determining the at least one subgroup time delay includes determining a common subgroup time delay, and wherein actuating successive valves in the first subgroup and successive valves in the second subgroup includes using the common subgroup time delay for the successive valves in each of the first and second subgroups.

Aspect 11 can include, or can optionally be combined with the subject matter of any of Aspects 1-10 to include, wherein determining the common subgroup time delay includes: determining an initial subgroup time delay by dividing a set distance by the product of a current or maximum vehicle speed value and the total number of the plurality of valves; and determining the common subgroup time delay by subtracting a processing delay from the initial subgroup time delay.

Aspect 12 can include subject matter such as a sprayer control system for applying an agricultural product using plurality of valves separated into subgroups. The system of aspect 12 can include a processing system including a master node and a plurality of electronic control units (ECUs) in communication with the master node, the processing system configured regulate supply of the agricultural product to the plurality of valves. The processing system can ve configured to provide a phase delay for actuation of a first subgroup of the plurality of valves and a second subgroup of the plurality of valves. The processing system can further be configured to determine at least one subgroup time delay for separating actuation of valves within the first subgroup and the second subgroup, the at least one subgroup time delay being determined based on one or more vehicle speed values and a total number of the plurality of valves. The processing system can also be configured to actuate the valves to dispense the agricultural product by, e.g., being configured to actuate the first subgroup of valves and the second subgroup of valves in succession using the phase delay; and actuate successive valves in the first subgroup and successive valves in the second subgroup using the at least one subgroup time delay.

Aspect 13 can include, or can optionally be combined with the subject matter of any of Aspects 12 to include, wherein the processing system is configured to determine the at least one subgroup time delay based on the one or more vehicle speed values, the total number of the plurality of valves, and a set distance.

Aspect 14 can include, or can optionally be combined with the subject matter of any of Aspects 12-13 to include, wherein the one or more vehicle speed values includes a set maximum speed.

Aspect 15 can include, or can optionally be combined with the subject matter of any of Aspects 12-14 to include, wherein the processing system is configured to determine the one or more subgroup time delays by dividing the set distance by the product of the set maximum speed and the total number of the plurality of nozzles.

Aspect 16 can include, or can optionally be combined with the subject matter of any of Aspects 12-15 to include, wherein the one or more vehicle speed values includes a current speed of the vehicle.

Aspect 17 can include, or can optionally be combined with the subject matter of any of Aspects 12-16 to include, wherein the processing system is configured to determine the at least one subgroup time delay by dividing the set distance by the product of the current speed of the vehicle and the total number of the plurality of nozzles.

Aspect 18 can include, or can optionally be combined with the subject matter of any of Aspects 12-17 to include, wherein the one or more vehicle speed values includes a current speed of the vehicle and a minimum speed value.

Aspect 19 can include, or can optionally be combined with the subject matter of any of Aspects 12-18 to include, wherein the processing system is configured to determine the at least one subgroup time delay by: determining a current delay time by dividing the set distance by the product of the current speed of the vehicle and the total number of the plurality of nozzles; determining a maximum delay time by dividing the set distance by the product of the minimum speed value and the total number of the plurality of nozzles; using the maximum delay time for the one or more subgroup time delays when current delay time is greater than the maximum delay time; and using the current delay time for the one or more subgroup time delays when the current delay time is not greater than the maximum delay time.

Aspect 20 can include, or can optionally be combined with the subject matter of any of Aspects 12-19 to include, wherein the minimum speed value is determined based on tip volume per minute and tip pressure.

Aspect 21 can include, or can optionally be combined with the subject matter of any of Aspects 12-20 to include, wherein the at least one subgroup time delay includes a common subgroup time delay, and wherein the processing system is configured to actuate successive valves in the first subgroup and successive valves in the second subgroup includes using the common subgroup time delay for the successive valves in each of the first and second subgroups.

Aspect 22 can include, or can optionally be combined with the subject matter of any of Aspects 12-21 to include, wherein processing system is configured to determine the common subgroup time delay by: determining an initial subgroup time delay by dividing a set distance by the product of a current or maximum vehicle speed value and the total number of the plurality of valves; and determining the common subgroup time delay by subtracting a processing delay from the initial subgroup time delay.

The above description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein. In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

The present subject matter includes, inter alia, the following aspects:

1. A method of applying an agricultural product using an agricultural vehicle and plurality of valves separated into subgroups, the method comprising:

supplying the agricultural product to the plurality of valves separated into at least a first subgroup of the plurality of valves and a second subgroup of the plurality of valves;
determining at least one subgroup time delay for separating actuation of valves within the first subgroup and the second subgroup, the at least one subgroup time delay being determined based on one or more vehicle speed values and a total number of the plurality of valves; and
actuating the valves to dispense the agricultural product, wherein the actuating includes:

actuating the first subgroup of valves and the second subgroup of valves in succession using a phase delay; and
actuating successive valves in the first subgroup and successive valves in the second subgroup using the at least one subgroup time delay.

2. The method of aspect 1, wherein determining the at least one subgroup time delay includes determining a delay time based on the one or more vehicle speed values, the total number of the plurality of valves, and a set distance.

3. The method of aspect 2, wherein the one or more vehicle speed values includes a set maximum speed value.

4. The method of aspect 3, wherein determining the delay time includes dividing the set distance by the product of the set maximum speed and the total number of the plurality of nozzles.

5. The method of aspect 2, wherein the one or more vehicle speed values includes a current speed value for the vehicle.

6. The method of aspect 4, wherein determining the delay time includes dividing the set distance by the product of the current speed value and the total number of the plurality of nozzles.

7. The method of aspect 2, wherein the one or more vehicle speed values includes a current speed value for the vehicle and a minimum speed value.

8. The method of aspect 7, wherein determining the delay time includes:

determining a current delay time by dividing the set distance by the product of the current speed of the vehicle and the total number of the plurality of nozzles;
determining a maximum delay time by dividing the set distance by the product of the minimum speed value and the total number of the plurality of nozzles;
using the maximum delay time for the delay times when current delay time is greater than the maximum delay time; and

using the current delay time for the delay time when the current delay time is not greater than the maximum delay time.

9. The method of aspect 7, further including determining the minimum speed value based on tip volume flow rate and tip pressure.

10. The method of aspect 1, wherein determining the at least one subgroup time delay includes determining a common subgroup time delay, and wherein actuating successive valves in the first subgroup and successive valves in the second subgroup includes using the common subgroup time delay for the successive valves in each of the first and second subgroups.

11. The method of aspect 10, wherein determining the common subgroup time delay includes:

determining an initial subgroup time delay by dividing a set distance by the product of a current or maximum vehicle speed value and the total number of the plurality of valves; and
determining the common subgroup time delay by subtracting a processing delay from the initial subgroup time delay.

12. A sprayer control system for applying an agricultural product using plurality of valves separated into subgroups, the system comprising:

a processing system including a master node and a plurality of electronic control units (ECUs) in communication with the master node, the processing system configured regulate supply of the agricultural product to the plurality of valves;
the processing system configured to provide a phase delay for actuation of a first subgroup of the plurality of valves and a second subgroup of the plurality of valves;
the processing system configured to determine at least one subgroup time delay for separating actuation of valves within the first subgroup and the second subgroup, the at least one subgroup time delay being determined based on one or more vehicle speed values and a total number of the plurality of valves; and
the processing system being configured to actuate the valves to dispense the agricultural product, wherein the processing system is configured to:

actuate the first subgroup of valves and the second subgroup of valves in succession using the phase delay; and
actuate successive valves in the first subgroup and successive valves in the second subgroup using the at least one subgroup time delay.

13. The sprayer control system of aspect 12, wherein the processing system is configured to determine the at least one subgroup time delay based on the one or more vehicle speed values, the total number of the plurality of valves, and a set distance.

14. The sprayer control system of aspect 13, wherein the one or more vehicle speed values includes a set maximum speed.

15. The sprayer control system of aspect 14, wherein the processing system is configured to determine the one or more subgroup time delays by dividing the set distance by the product of the set maximum speed and the total number of the plurality of nozzles.

16. The sprayer control system of aspect 13, wherein the one or more vehicle speed values includes a current speed of the vehicle.

17. The sprayer control system of aspect 16, wherein the processing system is configured to determine the at least one subgroup time delay by dividing the set distance by the product of the current speed of the vehicle and the total number of the plurality of nozzles.

18. The sprayer control system of aspect 13, wherein the one or more vehicle speed values includes a current speed of the vehicle and a minimum speed value.

19. The sprayer control system of aspect 18, wherein the processing system is configured to determine the at least one subgroup time delay by:

determining a current delay time by dividing the set distance by the product of the current speed of the vehicle and the total number of the plurality of nozzles;

determining a maximum delay time by dividing the set distance by the product of the minimum speed value and the total number of the plurality of nozzles;

using the maximum delay time for the one or more subgroup time delays when current delay time is greater than the maximum delay time; and

using the current delay time for the one or more subgroup time delays when the current delay time is not greater than the maximum delay time.

20. The sprayer control system of aspect 19, wherein the minimum speed value is determined based on tip volume per minute and tip pressure.

21. The sprayer control system of aspect 12, wherein the at least one subgroup time delay includes a common subgroup time delay, and wherein the processing system is configured to actuate successive valves in the first subgroup and successive valves in the second subgroup includes using the common subgroup time delay for the successive valves in each of the first and second subgroups.

22. The sprayer control system of aspect 21, wherein processing system is configured to determine the common subgroup time delay by:

determining an initial subgroup time delay by dividing a set distance by the product of a current or maximum vehicle speed value and the total number of the plurality of valves; and

determining the common subgroup time delay by subtracting a processing delay from the initial subgroup time delay.

**Claims**

1. A method of applying an agricultural product using an agricultural vehicle (100) and plurality of valves (606a-h) separated into subgroups, the method comprising:

supplying the agricultural product to the plurality of valves (606a- h) separated into at least a first subgroup of the plurality of valves (606a- h) and a second subgroup of the plurality of valves (606a-h); and

actuating the valves to dispense the agricultural product.

2. The method of claim 1, wherein the method further includes:

determining at least one subgroup cycle time for separating actuation of valves within the first subgroup and the second subgroup, the at least one subgroup cycle time being dynamically determined based on one or more vehicle speed values (614), spray objectives, or operating conditions of nozzles;

wherein the actuating includes:

actuating successive valves in the first subgroup and successive valves in the second subgroup using the at least one subgroup cycle time.

3. The method of claim 2, wherein as the one or more vehicle speed values (614) increases, the at least one subgroup cycle time increases.

4. The method of claim 2 or 3, wherein the operating conditions of the nozzles includes at least a nozzle flow rate.

5. The method of any one of claims 2-4, wherein the one or more vehicle speed values (614) includes a set maximum speed value and/or a current speed value for the agricultural vehicle (100).

6. The method of any one of claims 2-5, wherein the one or more vehicle speed values (614) includes a current speed value for the agricultural vehicle (100) and a minimum speed value, and wherein the method further includes determining the minimum speed value based on tip volume flow rate and tip pressure.

7. The method of any one of claims 2-6, wherein determining the at least one subgroup cycle time includes determining a common subgroup cycle time, and wherein actuating successive valves in the first subgroup and successive valves in the second subgroup includes using the common subgroup cycle time for the successive valves in each of the first and second subgroups of the plurality of valves.

8. The method of any one of claims 1-7, wherein actuating the valves further includes:
   actuating the first subgroup of valves and the second subgroup of valves in succession using a phase delay.

9. A sprayer control system (600) for applying an agricultural product using plurality of valves (606a-h) separated into subgroups, the sprayer control system (600) comprising:
   a processing system (650) including a master node (601) and a plurality of electronic control units (ECUs) in communication with the master node (601), the processing system (650) configured regulate supply of the agricultural product to the plurality of valves (606a-h); and
   the processing system (650) being configured to actuate the valves to dispense the agricultural product.

10. The sprayer control system (600) of claim 9, wherein the processing system (650) is further configured to:

   determine at least one subgroup cycle time for separating actuation of valves within a first subgroup and a second subgroup, the at least one subgroup cycle time being determined based on one or more vehicle speed values (614) spray objectives, or operating conditions of nozzles;
   wherein actuate the valves includes actuate successive valves in the first subgroup and successive valves in the second subgroup using the at least one subgroup cycle time.

11. The sprayer control system (600) of claim 10, wherein the operating conditions of the nozzles includes at least a nozzle flow rate.

12. The sprayer control system (600) of claim 10 or 11, wherein the one or more vehicle speed values (614) includes a set maximum speed and/or a current speed of an agricultural vehicle (100).

13. The sprayer control system (600) of any one of claims 10-12, wherein the one or more vehicle speed values (614) includes a current speed of an agricultural vehicle (100) and a minimum speed value, the minimum speed value being determined based on tip volume per minute and tip pressure.

14. The sprayer control system (600) of any one of claims 10-13, wherein the at least one subgroup cycle time includes a common subgroup cycle time, and wherein the processing system is configured to actuate successive valves in the first subgroup and successive valves in the second subgroup includes using the common subgroup cycle time for the successive valves in each of the first and second subgroups of the plurality of valves.

15. The sprayer control system (600) of any one of claims 9-14, wherein the processing system (650) is further configured to:

   provide a phase delay for actuation of the first subgroup of the plurality of valves (606a-h) and the second subgroup of the plurality of valves (606a-h); and
   wherein the processing system (650) is configured to:
   actuate the first subgroup of valves and the second subgroup of valves in succession using the phase delay.

FIG. 1

FIG. 2

FIG. 3

304

402

404

420

421

406

400

422

406

411

410

407

418

401

408

412

409

414

414

416

**FIG. 4**

FIG. 5

Figure 6A

Figure 6B

Supplying agricultural product to a plurality of valves separated into at least a first subgroup and a second subgroup — 702

Determining at least one subgroup delay time, for separating actuation of valves within the first subgroup and the second subgroup, based on one or more vehicle speed values and a total number of valves — 704

Actuating the first subgroup of valves and the second subgroup of valves in succession using a phase delay — 706

Actuating successive valves in the first subgroup and successive valves in the second subgroup using the at least one subgroup delay time — 708

FIG. 7

FIG. 8

**FIG. 9**

FIG. 10

EP 4 706 390 A2

FIG. 11

FIG. 12

**EP 4 706 390 A2**

**Patent documents cited in the description**

- US 63215733